(19) Europäisches Patentamt
European Patent Office
Office européen des brevets

(11) **EP 3 460 275 B1**

(12) **FASCICULE DE BREVET EUROPEEN**

(45) Date de publication et mention
de la délivrance du brevet:
**01.12.2021 Bulletin 2021/48**

(21) Numéro de dépôt: **18196368.7**

(22) Date de dépôt: **24.09.2018**

(51) Int Cl.:
*F16C 33/38* *(2006.01)*     *F16C 33/41* *(2006.01)*
*F16C 33/42* *(2006.01)*     *F16C 19/16* *(2006.01)*
*F16C 33/30* *(2006.01)*     *F16C 33/58* *(2006.01)*
*G04B 5/04* *(2006.01)*     *G04B 5/18* *(2006.01)*
*F16C 33/66* *(2006.01)*     *F16C 19/06* *(2006.01)*
*F16C 19/10* *(2006.01)*     *F16C 33/32* *(2006.01)*
*F16C 33/60* *(2006.01)*

(54) **ROULEMENT HORLOGER**

LAGER FÜR UHRWERK

TIMEPIECE BEARING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.09.2017 EP 17192975
25.09.2017 EP 17192977**

(43) Date de publication de la demande:
**27.03.2019 Bulletin 2019/13**

(73) Titulaire: **ROLEX SA
1211 Genève 26 (CH)**

(72) Inventeurs:
• **LE FÈVRE, Pierre
1209 Genève (CH)**
• **MILLET, Florent
39310 Septmoncel (FR)**

(74) Mandataire: **Moinas & Savoye SARL
27, rue de la Croix-d'Or
1204 Genève (CH)**

(56) Documents cités:
**EP-B1- 1 520 111**     **CH-A2- 711 020**
**DE-A1- 1 447 346**     **FR-A- 1 219 331**
**FR-A1- 2 886 995**     **JP-A- 2006 316 933**
**US-A1- 2011 221 201**

• **Horotech: "EN_28v", , 1 janvier 2016
(2016-01-01), pages 1-23, XP055463729, Extrait de
l'Internet: URL:http://horotec.ch/file/EN_28v.pdf
[extrait le 2018-03-28]**

EP 3 460 275 B1

**Description**

L'invention concerne un roulement horloger comprenant une cage de séparation de corps roulants. L'invention concerne encore un mécanisme horloger comprenant un tel roulement avec une telle cage. L'invention concerne aussi un mouvement horloger comprenant un tel mouvement ou un tel roulement avec une telle cage. L'invention concerne aussi une pièce d'horlogerie comprenant un tel mouvement ou un tel mécanisme ou un tel roulement. L'invention concerne aussi un procédé de réalisation d'un tel roulement ou d'un tel mécanisme ou d'un tel mouvement ou d'une telle pièce d'horlogerie.

Les roulements, en particulier les roulements à billes, sont couramment employés dans le domaine de l'horlogerie, notamment pour mettre en œuvre le pivotement de mobiles tels que des masses oscillantes de mouvements à remontage automatique. En effet, le roulement a pour avantage de permettre une rotation rapide d'un mobile avec un minimum de frottement, en supportant des charges axiales et/ou radiales importantes, tout en assurant le positionnement précis dudit mobile.

La demande de brevet EP1520111 divulgue un roulement à billes à quatre points de contact dont l'architecture est bien connue de l'art antérieur. Celui-ci comporte un nombre prédéterminé de billes disposées dans une cage elle-même disposée entre une bague extérieure et une bague intérieure constituée de deux rondelles fixées entre elles. Selon l'enseignement de ce document, la lubrification d'un roulement horloger pose différents problèmes vis-à-vis, d'une part, de la difficulté à maîtriser la quantité adéquate de lubrifiant, et d'autre part, des éventuelles baisses de performances dudit roulement. Le document propose ainsi de mettre en œuvre des billes faites en une céramique d'oxyde de zirconium de façon à proposer un roulement ne nécessitant pas de lubrification.

La demande de brevet CH709348 divulgue une architecture de roulement à billes assimilable à celle du roulement du document EP1520111. Le document illustre une cage présentant une forme de couronne circulaire dotée d'ajourages au niveau de sa périphérie extérieure, qui sont prévus pour réceptionner les billes. A l'instar de l'unique figure du fascicule de la demande EP1520111, le document CH709348 illustre une surface de contact ou une surface potentielle de contact conséquente entre la cage et la bague intérieure du roulement.

La demande de brevet EP2787234 divulgue une architecture de roulement à billes légèrement différente de celle des roulements des documents EP1520111 et CH709348, avec une bague intérieure monobloc et une bague extérieure constituée de deux rondelles. La cage présente ici une forme de couronne circulaire dotée d'ajourages au niveau de sa périphérie intérieure, qui sont prévus pour réceptionner les billes. Le document illustre également une surface de contact ou une surface potentielle de contact conséquente entre la cage et la bague extérieure du roulement.

La demande de brevet CH711020 concerne une architecture alternative de roulement à billes. Celle-ci met en œuvre des bagues intérieure et extérieure monoblocs entre lesquelles une cage présentant une forme de cylindre creux est disposée. Cette cage est dotée d'ajourages au niveau d'une de ses extrémités axiales, qui sont prévus pour réceptionner les billes. En fonctionnement conventionnel d'un tel roulement à billes, il subsiste un jeu entre la cage et les bagues, notamment la bague intérieure. Néanmoins, un choc peut induire un contact entre la cage et l'une ou l'autre des deux bagues, notamment la bague intérieure. A l'instar des constructions précédentes, il existe ainsi une surface potentielle de contact conséquente entre la cage et la bague intérieure ou extérieure du roulement.

Les demandes de brevet FR 2 886 995 A1 et DE 1 447 346 A divulguent des roulements horlogers suivant le préambule de la revendication 1. Dans le document FR 2 886 995 A1 la configuration du roulement permet d'obtenir une rotation relative stable entre la bague intérieure et la bague extérieure du roulement. Dans le document DE 1 447 346 A un roulement de forme plate est divulgué dans lequel le jeu des billes est facilement ajustable.

Il existe par ailleurs des roulements à billes dénués de cage. A titre d'exemple, le fabricant MPS propose un roulement « plein de billes » connu sous la dénomination commerciale « Myrox14 ». Celui-ci est constitué de bagues intérieure et extérieure en céramique de type oxyde de zirconium et comporte des billes également faites du même matériau.

Différents documents mentionnent qu'il ne faut pas lubrifier les roulements horlogers du fait des inconvénients déjà évoqués.

Néanmoins, des études de la demanderesse montrent que le bruit de fonctionnement d'un roulement non lubrifié ne répond pas à ses critères d'exigences. En effet, le fonctionnement d'un roulement peut induire un bruit audible par un horloger, voire un porteur d'une montre-bracelet incorporant un tel roulement, notamment à neuf ou après plusieurs années de fonctionnement.

Le but de l'invention est de fournir une cage de séparation de corps roulants d'un roulement ou un roulement permettant de remédier aux inconvénients mentionnés précédemment et d'améliorer les dispositifs connus de l'art antérieur. En particulier, l'invention propose un roulement muni ou non d'une cage de séparation qui est silencieux et dont les performances dans le temps restent stables.

Selon un premier aspect de l'invention, un roulement horloger est proposé selon la revendication 1. Des aspects préférentiels de l'invention comportent un roulement horloger selon les revendications 2 à 10, un mécanisme horloger selon la revendication 11, un mouvement horloger selon la revendication 12 et une pièce d'horlogerie selon la revendication 13.

Selon un premier aspect de l'invention, un procédé de fabrication est proposé selon la revendication 14.

Les figures annexées représentent, à titre d'exemple, un mode de réalisation d'une pièce d'horlogerie selon l'invention et un exemple de réalisation ne faisant pas partie de l'invention revendiquée.

Les figures 1 à 3 sont des vues représentant une première variante d'un premier mode de réalisation d'une pièce d'horlogerie.

La figure 4 est une vue représentant une cage d'une deuxième variante du premier mode de réalisation de la pièce d'horlogerie.

Les figures 5 et 6 sont des vues représentant une quatrième variante du premier mode de réalisation de la pièce d'horlogerie.

La figure 7 est une vue représentant une cinquième variante du premier mode de réalisation de la pièce d'horlogerie.

Les figures 8 et 9 sont des vues représentant un exemple de réalisation d'une pièce d'horlogerie ne faisant pas partie de l'invention.

Les figures 10 à 12 sont des vues en coupe de variantes de réalisation d'une cage, selon un plan X-X illustré sur la figure 1.

La figure 13 est une vue de la surface B de la cage de la première variante du premier mode de réalisation.

La figure 14 est une vue de la surface A de la cage de la première variante du premier mode de réalisation.

La figure 15 est une vue de la surface B de la cage de la variante de la figure 11.

La figure 16 est une vue de la surface A de la cage de la variante de la figure 11.

La figure 17 est une vue de la surface B de la cage de la variante de la figure 12.

La figure 18 est une vue de la surface A de la cage de la variante de la figure 12.

La figure 19 est une vue de la surface B de la cage de la deuxième variante du premier mode de réalisation.

La figure 20 est une vue de la surface A de la cage de la deuxième variante du premier mode de réalisation.

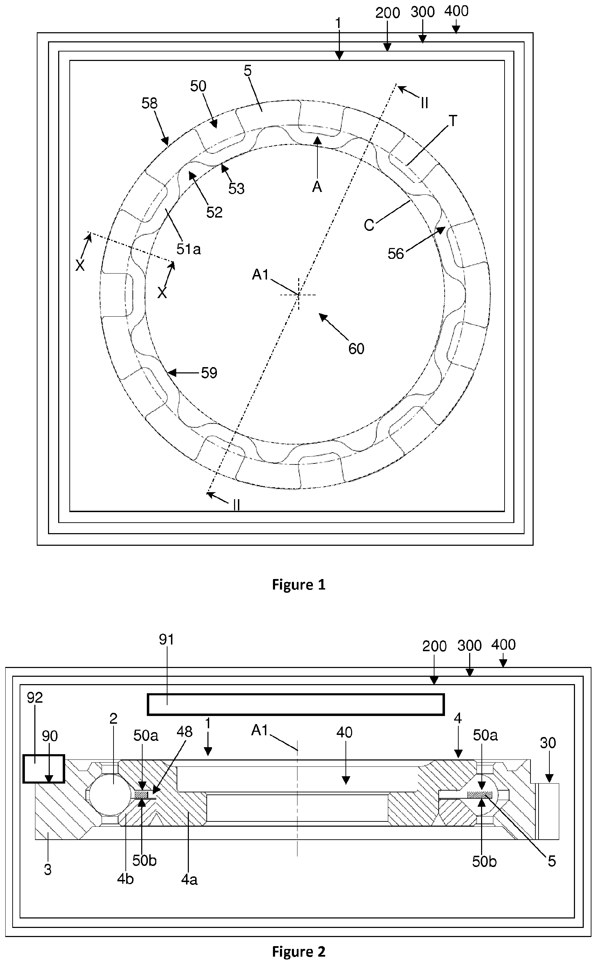

Une première variante d'un premier mode de réalisation d'une pièce d'horlogerie 400 est décrite ci-après en référence aux figures 1 à 3. La pièce d'horlogerie est par exemple une montre, en particulier une montre bracelet, notamment une montre bracelet automatique.

La pièce d'horlogerie comprend un mouvement horloger 300, en particulier un mouvement mécanique, notamment un mouvement automatique.

Le mouvement comprend un mécanisme horloger 200. Ce mécanisme peut par exemple être un dispositif de masse oscillante d'un dispositif de remontage automatique ou être un dispositif de remontage automatique. Le mécanisme comprend un roulement. Le roulement peut guider en rotation une masse oscillante 92 relativement à un bâti 91 autour d'un axe A1.

Le roulement 1 est par exemple un roulement horloger, notamment un roulement à billes horloger. Le roulement comprend une première bague 4, notamment une bague intérieure, une deuxième bague 3, notamment une bague extérieure, des corps roulants 2, notamment des billes, et une cage 5 de séparation de corps roulants.

Une des bagues 4 peut être prévue pour être fixée à un bâti du mouvement d'horlogerie. Elle peut ainsi présenter une conformation 40 permettant son assemblage au bâti. Préférentiellement, l'autre bague 3 présente au moins un moyen 30 de liaison avec un mécanisme du mouvement. Ce moyen peut, par exemple, être une denture 30. Le mécanisme du mouvement peut, par exemple, être un mécanisme de remontage automatique. A cet effet, la bague 3 peut, en outre, comprendre une surface 90 de réception d'une masse oscillante 92.

Le roulement présente un axe A1 autour duquel la première ou deuxième bague est guidée en rotation par le biais des corps roulants. Les première et deuxième bagues présentent chacune un chemin de roulement prévu pour le roulement des corps roulants.

Le roulement comprend un nombre prédéterminé de corps roulants 2 disposés dans une cage 5 de séparation. La cage de séparation est disposée entre la bague extérieure 3 et la bague intérieure 4.

Une des première et deuxième bagues, par exemple la bague intérieure, est constituée de deux éléments annulaires ou rondelles 4a, 4b fixés entre eux ou simplement rappelés l'un vers l'autre, par exemple, élastiquement. Les premier et deuxième éléments annulaires sont conformés de sorte à ménager, lorsqu'ils sont assemblés ou rappelés l'un vers l'autre jusqu'à une position définie par la géométrie des corps roulants ou par une entretoise prévue entre les premier et deuxième éléments annulaires, une rainure 48 de logement de la cage.

La cage 5 de séparation de corps roulants 2 présente des premières ouvertures 50 de réception des corps roulants et au moins une première zone de contact 56 destinée à venir en contact avec une bague de roulement et présentant au moins une première conformation en creux 52. La bague ne fait pas partie de la cage.

La première zone de contact est de préférence une zone annulaire destinée à venir en contact avec l'une des première et deuxième bagues du roulement, en particulier avec une deuxième zone de contact 49 de l'une des première et deuxième bagues du roulement.

La cage comprend préférentiellement au moins deux premières zones de contact 56 destinées à venir en contact avec deux deuxièmes zones de contact sur l'une et/ou l'autre des bagues du roulement. L'au moins une première conformation en creux 52 permet de limiter les contacts entre les premières et deuxièmes zones de contact.

La cage a pour fonction de séparer les corps roulants afin d'éviter le contact direct entre deux corps roulants consécutifs. Autrement dit, la cage 5 est une cage de maintien des corps roulants dans le sens où elle permet de maintenir un écart entre deux corps roulants consécutifs, notamment lorsque les première et deuxième bagues sont en mouvement l'une par rapport à l'autre, ou elle permet de maintenir en position les corps roulants les uns par rapport aux autres, notamment lorsque les première et deuxième bagues sont en mouvement l'une par rapport à l'autre.

Dans la première variante du premier mode de réalisation, la cage présente une forme de couronne circulaire plane ou globalement plane.

La cage comprend un premier bord 58 et un deuxième bord 59. Le premier bord 58 est avantageusement circulaire. Le premier bord 58 est de préférence centré ou sensiblement centré sur l'axe A1. Le deuxième bord 59 est avantageusement circulaire. Le deuxième bord 59 est de préférence centré ou sensiblement centré sur l'axe A1 et/ou est de préférence concentrique ou sensiblement concentrique au premier bord. L'axe A1 est de préférence un axe de symétrie de rotation de la cage ou sensiblement.

Les premières ouvertures 50 sont des ouvertures débouchant au niveau du premier bord 58 ou du deuxième bord 59. Dans la première variante du premier mode de réalisation, les premières ouvertures débouchent au niveau du premier bord qui est le bord extérieur de la cage.

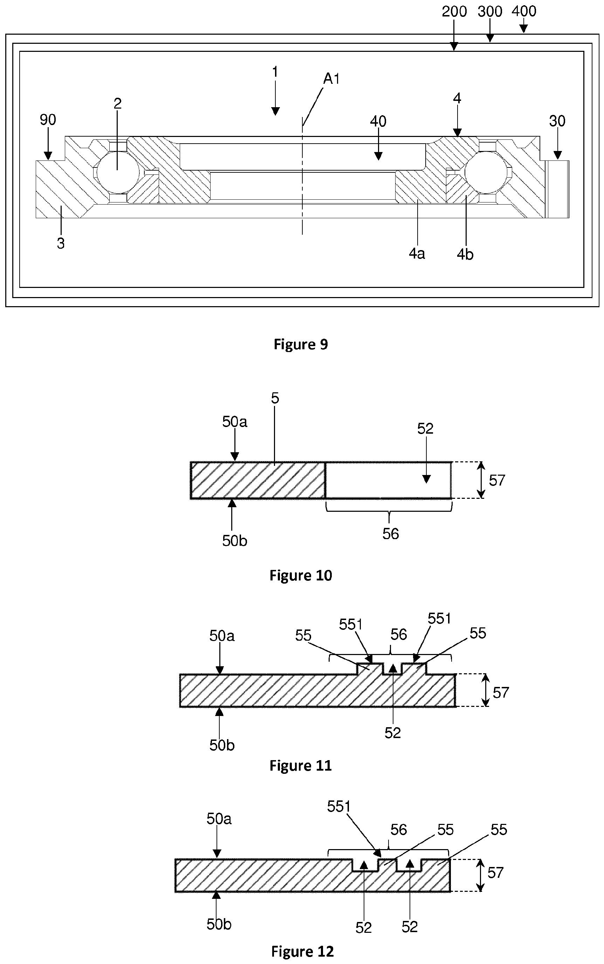

L'au moins une première conformation en creux 52 est, dans cette variante représentée, au moins une deuxième ouverture 52 traversant une épaisseur 57 de la cage, comme représenté sur la figure 10.

Par ailleurs, la deuxième ouverture 52 débouche au niveau du deuxième bord ou du premier bord. Dans la première variante du premier mode de réalisation, la deuxième ouverture débouche au niveau du deuxième bord qui est le bord intérieur de la cage. Toutefois, l'ouverture centrale 60 formant la couronne, en particulier l'ouverture centrale, circulaire ou sensiblement circulaire, et centrée sur l'axe A1, ne constitue pas la deuxième ouverture. La deuxième ouverture est réalisée dans la couronne limitée par le premier bord et par le deuxième bord.

De préférence, la cage peut comprendre plusieurs deuxièmes ouvertures 52. De préférence encore, les deuxièmes ouvertures 52 peuvent être disposées chacune entre deux premières ouvertures adjacentes.

En alternative, les premières ouvertures et/ou la ou les deuxièmes ouvertures peuvent ne pas déboucher au niveau de l'un et/ou l'autre des premier et deuxième bords.

En pratique, le fait que les premières et/ou deuxième(s) ouvertures débouchent sur l'un et/ou l'autre des premier et deuxième bords, peut altérer, au moins localement, la nature circulaire du premier et/ou du deuxième bord. A l'extrême, le premier bord circulaire et/ou le deuxième bord circulaire peut être défini comme une portion de cylindre circonscrite à la cage et/ou le premier bord circulaire et/ou le deuxième bord circulaire peut être défini comme une portion de cylindre inscrite dans l'ouverture centrale de la cage. Une portion de cylindre circonscrite à la cage peut ainsi constituer une portion de la périphérie extérieure de la cage, soit une portion du premier ou du deuxième bord. Une portion de cylindre inscrite dans l'ouverture centrale de la cage peut ainsi constituer une portion de la périphérie intérieure de la cage, soit une portion du premier ou du deuxième bord.

La cage est également définie axialement, dans cette première variante du premier mode de réalisation, par des surfaces planes 50a, 50b. Les surfaces 50a, 50b peuvent être délimitées dans le plan par des portions de la périphérie intérieure et des portions de la périphérie extérieure de la cage. La distance entre ces surfaces planes définit une épaisseur 57 de la cage. L'aire des surfaces planes 50a et/ou 50b peut ainsi être définie comme étant l'aire de la surface B de la cage. D'une manière plus générale, dans tous les modes de réalisation et variantes dans lesquels la cage a globalement une forme annulaire plane, l'aire de la surface B de la cage peut être définie comme étant l'aire de la projection de la cage selon l'axe A1 sur un plan perpendiculaire à l'axe A1. Ainsi, toute extrusion ou protrusion, mais aussi toute rainure ou gorge, disposée à la surface de la cage est sans influence sur l'aire de la surface B de la cage. Autrement dit, la surface B est la projection orthogonale de la cage selon l'axe A1.

Les mouvements de la cage relativement à l'une et/ou à l'autre des première et deuxième bagues sont limités :

- axialement relativement à l'axe A1 d'une part, par des surfaces 41a et 41b de l'une et/ou l'autre des première et deuxième bagues, notamment des surfaces de flanc de rainure, et
- radialement relativement à l'axe A1 d'autre part, par :

  • une paroi 43a de l'une et/ou l'autre des première et deuxième bagues, notamment une paroi de fond de rainure, et/ou
  • les corps roulants dans le cas où on laisse suffisamment de jeu radial entre la paroi 53 de la cage et la paroi 43a de fond de rainure de l'une ou l'autre des première et deuxième bagues. Dans ce cas on peut encore diminuer avantageusement les aires de contact cage-bague.

Les surfaces 41a et 41b peuvent, par exemple, être disposées respectivement sur les éléments annulaires 4a et 4b de la deuxième bague, notamment la bague intérieure. Les surfaces 41a et 41b coopèrent avec les zones de contact 49.

Il existe un jeu radial entre le bord intérieur 59 de la cage et la paroi 43a de fond de rainure. Il existe en outre un jeu axial entre les surfaces 41a et 41b et les surfaces 50a et 50b. Les interfaces bague-cage définissent l'ébat axial de la cage relativement aux bagues.

La première zone de contact 56 ou la surface potentielle de contact entre la cage 5 et l'une des bagues, notamment l'élément annulaire 4a ou l'élément annulaire 4b, est délimitée par le cercle tireté T et le cercle C inscrit dans l'ouverture centrale, qui sont illustrés sur la figure 1.

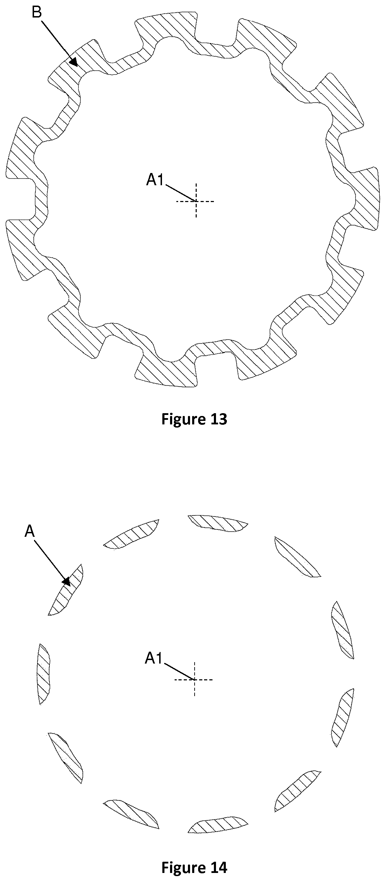

La cage est agencée ou la cage et les première et deuxième bagues sont agencées de sorte que l'aire de la surface A (représentée hachurée sur la figure 14) de la cage susceptible de venir en contact avec les bagues est inférieure à 60%, voire inférieure à 50%, voire inférieure à 45%, voire inférieure à 30%, de l'aire de la surface B (représentée hachurée sur la figure 13) de la cage. La surface A est constituée par l'ensemble des points d'une face de la cage susceptibles de venir en contact avec une bague du roulement, dans un mode de fonctionnement normal du roulement, c'est-à-dire lorsque le roulement est assemblé et qu'une bague du roulement est mise en mouvement relativement à une autre bague du roulement autour de l'axe A1. Des surfaces A et B peuvent se trouver sur une première face de la cage et/ou des surfaces A et B peuvent se trouver sur une deuxième face de la cage.

Les deuxièmes ouvertures ou deuxièmes ajourages 52 sont conformés de façon à minimiser l'aire de la surface A. Plus particulièrement, ces deuxièmes ajourages 52 définissent une portion 56 constituée de multiples saillies 51a orientées vers l'intérieur de la cage. Préférentiellement, ces deuxièmes ajourages 52 sont disposés entre deux premiers ajourages 50 consécutifs. Préférentiellement, deux saillies 51a sont disposées de part et d'autre d'un deuxième ajourage 52. Préférentiellement, le nombre de deuxièmes ajourages 52 est égal au nombre d'ajourages 50.

Dans cette première variante de réalisation du premier mode de réalisation, l'aire de la surface A correspondant à la somme des aires Aa des multiples saillies 51a.

Dans cette première variante de réalisation du premier mode de réalisation, la cage 5 comporte onze premiers ajourages 50 et onze deuxièmes ajourages 52. Dans cette variante de réalisation particulière :

$$AA = 0.4 \times AB,$$

Avec :

AA : l'aire de la surface A ; et
AB : l'aire de la surface B.

Avantageusement, les saillies 51a, en particulier des extrémités des saillies 51a, sont capables de venir rompre un film de lubrifiant disposé à l'interface des surfaces 50a et 41a ou 50b et 41b. Avantageusement, les saillies 51a, en particulier des extrémités des saillies 51a, sont capables de venir rompre un film d'huile disposé à l'interface de la paroi longitudinale de fond de rainure 43a et de la paroi longitudinale 53 du bord intérieur de la cage. Avantageusement, le lubrifiant peut être confiné au sein des deuxièmes ajourages 52 de façon à ce qu'il n'induise pas un couple résistif supérieur à un couple prédéfini. Ainsi, le lubrifiant ne prétérite pas les performances du roulement.

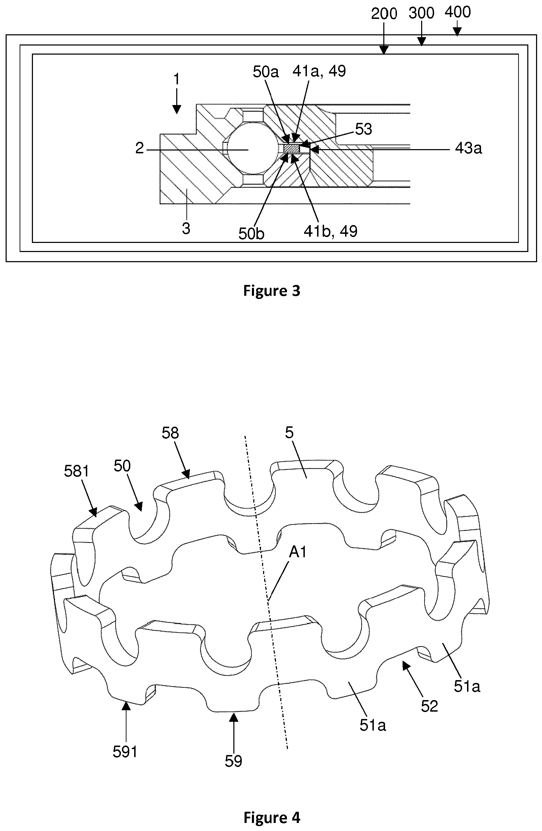

Les figures 2 et 3 illustrent la première variante du premier mode de réalisation dans lequel la cage est délimitée axialement par des surfaces planes 41a, 41b disposées respectivement sur les rondelles 4a, 4b de la bague intérieure 4. Bien entendu, il est possible de proposer un roulement à l'architecture alternative, assimilable à celle divulguée au sein du document EP2787234, avec une cage délimitée axialement par des surfaces planes de la bague extérieure 3. Dans ce cas de figure non représenté, la cage peut présenter une forme de couronne circulaire plane dotée de premiers ajourages 50 au niveau de son bord intérieur, qui sont prévus pour réceptionner les corps roulants. Les deuxièmes ajourages 52 définissent alors une portion 51 comprenant de multiples saillies 51a orientées vers l'extérieur de la cage.

Dans une deuxième variante du premier mode de réalisation représentée sur la figure 4, la cage 5 diffère de la cage de la première variante du premier mode de réalisation en ce qu'elle a une forme cylindrique. L'axe de la forme cylindrique est confondu ou sensiblement confondu avec l'axe A1.

Le premier bord 58 est un bord d'une première extrémité axiale 581 et le deuxième bord 59 est un bord d'une deuxième extrémité axiale 591.

La cage peut donc également se présenter sous la forme d'un cylindre ajouré. Des premiers ajourages 50 sont prévus à la première extrémité axiale 581 de la cage de façon à réceptionner des corps roulants 2, tandis que des deuxièmes conformations en creux 52 sont prévues à la deuxième extrémité axiale de la cage de façon à minimiser la surface potentielle cylindrique de contact entre la cage et l'une et/ou l'autre des deux bagues du roulement, en particulier la bague intérieure.

Dans cette deuxième variante, la cage est également définie axialement, par des plans distants définissant les première et deuxième extrémités. La distance entre ces plans définit la longueur de la cage. La cage est également définie radialement, par un premier cylindre et par un deuxième cylindre coaxial au premier cylindre, la différence de rayon des premier et deuxième cylindres définissant une épaisseur de la cage. Ces premier et deuxième cylindres déterminent donc les diamètres intérieur et extérieur de la cage.

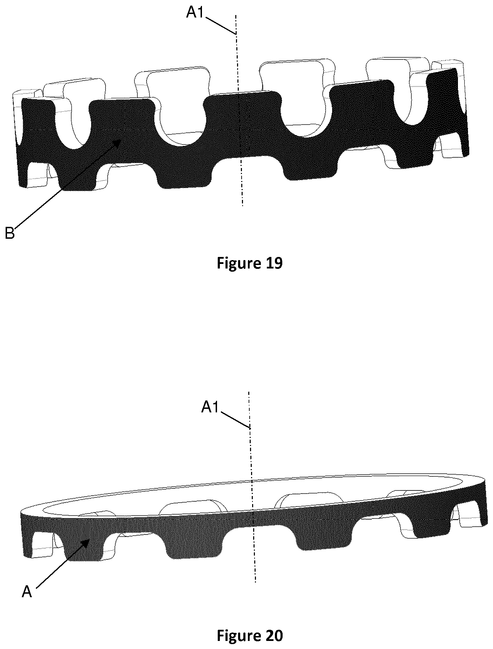

La cage est agencée ou la cage et les première et deuxième bagues sont agencées de sorte que l'aire de la surface A (représentée en noir sur la figure 20) de chaque côté de la cage susceptible de venir en contact avec l'une ou l'autre des bagues est inférieure à 50%, voire inférieure à 45%, voire inférieure à 40%, voire inférieure à 30%, de l'aire de la surface B (représentée en noir sur la figure 19) cylindrique de diamètre égal à celui du diamètre du cylindre définissant la surface A de la cage et comprise entre deux bords d'extrémité de la cage. Dans ce mode de réalisation, une surface B est donc la surface de la cage qui est visible lorsqu'on regarde chaque point de la cage radialement à l'axe A1. Dans ce mode de réalisation, une surface A est donc la surface de la cage qui est susceptible de venir en contact avec l'une ou l'autre des bagues et qui est visible lorsqu'on regarde chaque point de la cage radialement à l'axe A1. Des surfaces A et B peuvent se trouver à l'intérieur de la cage, c'est-à-dire au niveau du diamètre périphérique interne de la cage, et/ou des surfaces A et B peuvent se trouver à l'extérieur de la cage, c'est-à-dire au niveau du diamètre périphérique externe de la cage.

Dans une troisième variante du premier mode de réalisation, la cage 5 diffère de la cage de la première variante du premier mode de réalisation en ce qu'une surface de la bague comprend en outre au moins une première conformation en saillie axiale (c'est-à-dire selon l'axe A1). Le sommet de cette conformation en saillie est destiné à participer à une interface cage-bague de roulement.

L'au moins une première conformation en saillie comprend une nervure. Cette nervure peut être de forme circulaire ou sensiblement circulaire. De préférence, l'au moins une première conformation en saillie comprend deux nervures. Une première nervure est prévue pour venir en contact contre une surface d'une bague et une deuxième nervure est prévue pour venir en contact contre une autre surface d'une autre bague ou d'une même bague. Avantageusement, la première nervure est prévue sur une première face de la cage, notamment sur une première surface dans le plan de la cage, et la deuxième nervure est prévue sur une deuxième face de la cage, notamment sur une deuxième surface dans le plan de la cage. Un ou plusieurs creux (ou piqûres) peuvent être réalisés d'un côté ou de chaque côté de la nervure.

Alternativement, l'au moins une première conformation en saillie axiale (c'est-à-dire selon l'axe A1) comprend un ensemble de bossages, notamment au moins trois bossages, en particulier au moins trois bossages disposés circulairement ou sensiblement circulairement relativement à l'axe A1 et/ou au moins trois bossages disposés à intervalle angulaire régulier ou sensiblement régulier relativement à l'axe A1. De préférence, un premier ensemble de bossages est prévu pour venir en contact contre une première surface de bague, notamment une première face de premier élément annulaire et un deuxième ensemble de bossages est prévu pour venir en contact contre une deuxième surface de bague, notamment une deuxième surface de deuxième élément annulaire.

Alternativement encore, la géométrie de la cage peut également être non plane, notamment au niveau d'une ou de plusieurs zones destinées à venir en contact avec une des bagues. La cage peut avoir une forme de couronne à surface(s) ondulée(s), notamment au niveau de la ou des zones mentionnées. Ainsi, des saillies peuvent être orientées dans le sens axial du roulement, alors que les premiers ajourages 50 peuvent être orientés vers l'intérieur ou l'extérieur de la cage.

Les figures 11 et 12 illustrent la zone de contact 56 comprenant au moins une première conformation 55 en saillie et au moins une première conformation 52 en creux dont un sommet 551 est destiné à participer à une interface cage-bague de roulement.

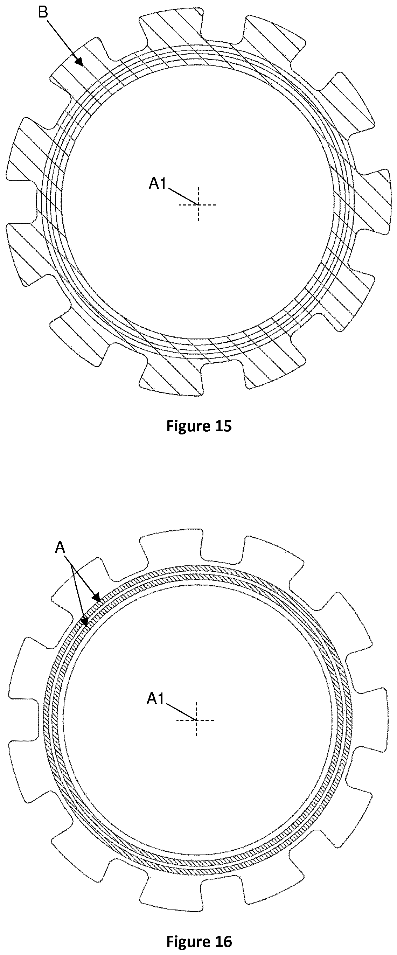

Dans la variante représentée sur la figure 11, les fonds des conformations en creux 52 sont globalement au même niveau que le reste de la surface 50a. Dans le cas de cette variante, la surface B est représentée hachurée sur la figure 15 et la surface A est représentée hachurée sur la figure 16.

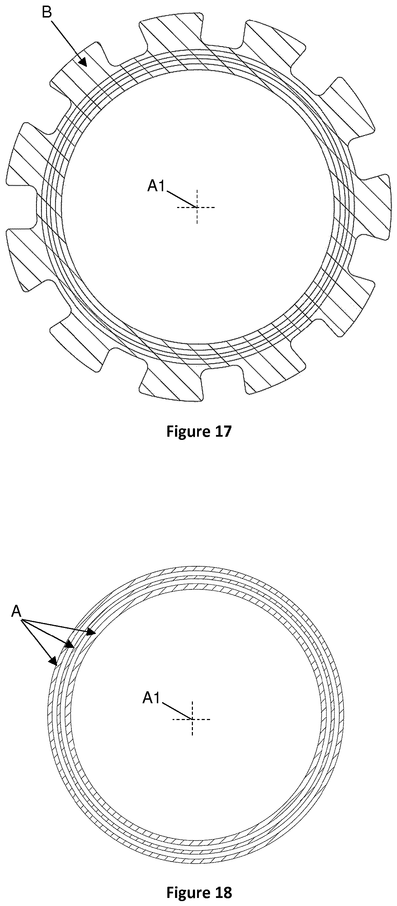

Dans la variante représentée sur la figure 12, les sommets 551 des conformations en saillie 55 sont globalement au même niveau que le reste de la surface 50a. Dans le cas de cette variante, la surface B est représentée hachurée sur la figure 17 et la surface A est représentée hachurée sur la figure 18.

En alternative encore, les fonds des conformations en creux 52 peuvent être globalement en retrait par rapport au reste de la surface 50a et les sommets 551 des conformations en saillie 55 peuvent être globalement en saillie par rapport au reste de la surface 50a.

Bien que non représentées sur les figures 11 et 12, les surfaces 50a et 50b peuvent être structurées ou conformées de la même manière. Les surfaces 50a et 50b peuvent être identiques ou symétriques l'une de l'autre.

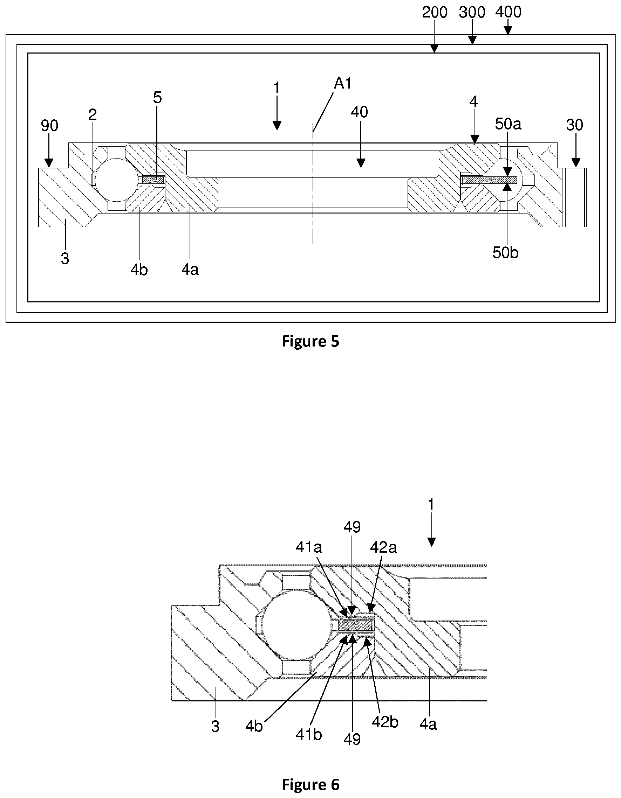

Dans une quatrième variante du premier mode de réalisation représentée sur les figures 5 et 6, le roulement diffère du roulement de la première variante du premier mode de réalisation en ce qu'au moins une bague comprend une deuxième zone de contact 49 présentant au moins une deuxième conformation en creux 42a ; 42b et/ou au moins une deuxième conformation 41a ; 41b en saillie.

L'au moins une deuxième conformation en creux permet de limiter les contacts entre les premières et deuxièmes zones de contact.

Le sommet de la conformation en saillie est destiné à participer à une interface cage-bague du roulement. Dans cette quatrième variante, la cage est une couronne ne présentant que des premières ouvertures pour recevoir les corps roulants.

L'au moins une deuxième conformation en saillie est une nervure ou comprend une ou plusieurs nervures. Cette nervure peut être de forme circulaire ou sensiblement circulaire. De préférence, l'au moins une deuxième conformation en saillie comprend deux nervures. Une première nervure 41a est prévue pour venir en contact contre une première surface 50a de la cage et une deuxième nervure 41b est prévue pour venir en contact contre une deuxième surface 50b de la cage. Avantageusement, la première nervure 41a est prévue sur un élément annulaire 4a et la deuxième nervure 41b est prévue sur un élément annulaire 4b. L'au moins une deuxième conformation en creux peut comprendre une ou plusieurs piqûres 42a, 42b pouvant être réalisées d'un côté ou de chaque côté de la nervure.

Les piqûres 42a, 42b peuvent présenter ou non les mêmes géométries. Ces piqûres 42a, 42b peuvent être formées sur 360° ou non. Plusieurs piqûres peuvent être combinées de façon à créer des gouttes en surface des éléments annulaires 4a, 4b.

Alternativement, l'au moins une deuxième conformation en saillie comprend un ensemble de bossages, notamment au moins trois bossages, en particulier au moins trois bossages disposés circulairement ou sensiblement circulairement relativement à l'axe A1 et/ou au moins trois bossages disposés à intervalle angulaire régulier ou sensiblement régulier relativement à l'axe A1. De préférence, un premier ensemble de bossages est prévu pour venir en contact contre la première surface 50a de la cage et un deuxième ensemble de bossages est prévu pour venir en contact contre la deuxième surface 50b de la cage. Avantageusement, le premier ensemble est prévu sur un élément annulaire 4a et le deuxième ensemble est prévu sur un élément annulaire 4b.

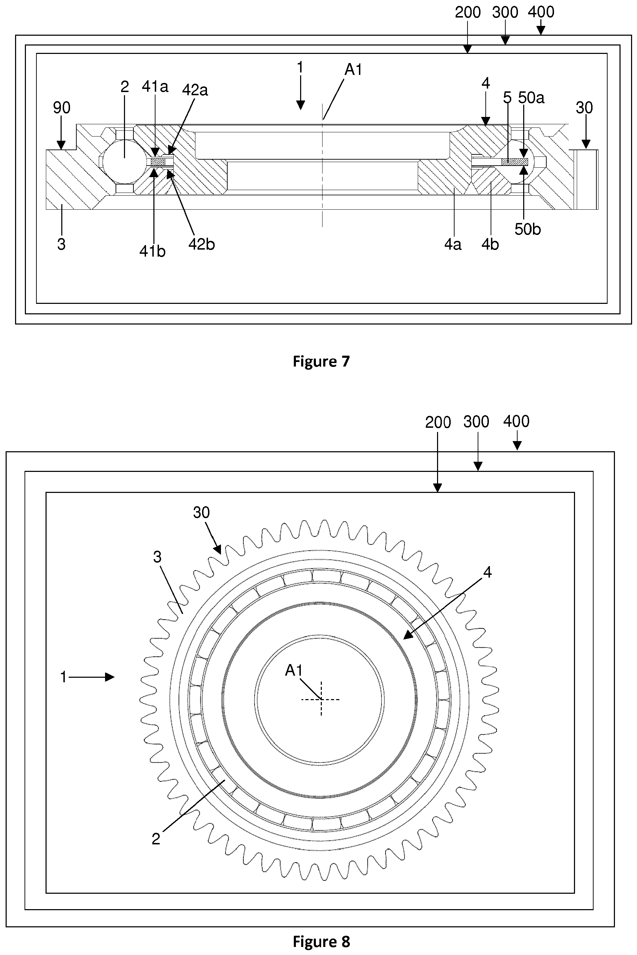

Sauf incompatibilité logique ou technique, toute combinaison de plusieurs des différentes variantes de réalisation précédemment décrites est envisageable. A titre d'exemple, la figure 7 représente une cinquième variante constituant une combinaison de la première variante de réalisation et de la quatrième variante de réalisation. Dans la réalisation de cette figure 7, le roulement comprend en effet une cage selon la première variante de réalisation et une bague selon la quatrième variante de réalisation.

Le premier mode de réalisation concerne donc un roulement lubrifié dont la cage et/ou au moins une bague est/sont conformée(s) de façon à minimiser au moins une surface de contact ou au moins une surface potentielle de contact entre la cage et la bague intérieure ou extérieure. Une telle réalisation permet ainsi de diminuer, voire d'annuler, au moins une surface de contact sur laquelle un lubrifiant est susceptible de venir se loger, et permet ainsi de minimiser le moment de frottement induit par le lubrifiant.

Ceci permet de lubrifier les roulements afin d'obtenir de bonnes performances en matière de bruit de fonctionnement des roulements, sans que le lubrifiant nuise à la performance de transmission énergétique du roulement, en particulier du fait d'un éventuel collement des composants prenant part au roulement, notamment de la cage et de la bague intérieure ou extérieure du roulement.

Un exemple de réalisation d'une pièce d'horlogerie 400 ne faisant pas partie de l'invention est décrit ci-après en référence aux figures 8 et 9. La pièce d'horlogerie est par exemple une montre, en particulier une montre bracelet, notamment une montre bracelet automatique.

La pièce d'horlogerie comprend un mouvement horloger 300, en particulier un mouvement mécanique, notamment un mouvement automatique.

Le mouvement comprend un mécanisme horloger 200. Ce mécanisme peut par exemple être un dispositif de masse oscillante d'un dispositif de remontage automatique ou être un dispositif de remontage automatique. Le mécanisme comprend un roulement.

Le roulement 1 est par exemple un roulement horloger, notamment un roulement à billes horloger. Le roulement comprend une première bague 4, notamment une bague intérieure, une deuxième bague 3, notamment une bague extérieure, des corps roulants 2, notamment des billes.

Le roulement présente un axe A1 autour duquel la première ou la deuxième bague est guidée en rotation par le biais des corps roulants. Les première et deuxième bagues présentent chacune un chemin de roulement prévu pour le roulement des corps roulants.

Le roulement est dénué de cage. Il est donc de type « sans cage ». Autrement dit, le roulement est du type « plein de billes » ou « à billes jointives ». De manière plus générale, le roulement est à « éléments ou corps roulants jointifs ». Plus particulièrement, des corps roulants du roulement sont susceptibles de venir en contact les uns avec les autres, notamment lorsqu'une bague est déplacée par rapport à l'autre autour de l'axe A1. Un tel roulement a pour avantage d'obvier aux risques de collement entre une cage et la bague intérieure ou extérieure du roulement, le roulement étant dépourvu de cage. De surcroît, un tel roulement a pour avantage de supporter de fortes charges, supérieures à celles supportables par un roulement selon le premier mode de réalisation. Un tel mode de réalisation est ainsi particulièrement bien adapté à un mécanisme de remontage automatique dont la masse oscillante 92 présente un couple statique supérieur ou égal à 120 μN.m, voire supérieur ou égal à 180 μN.m, voire supérieur ou égal à 220 μN.m, voire supérieur ou égal à 250 μN.m. Alternativement ou complémentairement, un tel mode de réalisation est également bien adapté à un mécanisme de remontage automatique dont la masse oscillante comporte un secteur lourd et présente une masse supérieure à 2 g, voire supérieure à 3g, voire supérieure à 4 g.

Une des bagues 4 peut être prévue pour être fixée à un bâti du mouvement d'horlogerie. Elle peut ainsi présenter une conformation 40 permettant son assemblage au bâti. Préférentiellement, l'autre bague 3 présente au moins un moyen 30 de liaison avec un mécanisme du mouvement. Ce moyen peut, par exemple, être une denture 30. Le mécanisme du mouvement peut, par exemple, être un mécanisme de remontage automatique. A cet effet, la bague 3 peut, en outre, comprendre une surface 90 de réception d'une masse oscillante non représentée.

Une des première et deuxième bagues, par exemple la bague intérieure, peut être constituée de deux éléments annulaires ou rondelles 4a, 4b fixés entre eux ou simplement rappelés l'un vers l'autre, par exemple, élastiquement.

Un mode d'exécution d'un procédé de réalisation d'un roulement horloger ou d'un mécanisme horloger ou d'un mouvement horloger ou d'une pièce d'horlogerie tels qu'évoqués précédemment est décrit ci-après.

Le procédé comprend les étapes suivantes :

- fournir un roulement comprenant une première bague 4, notamment une bague intérieure, une deuxième bague 3, notamment une bague extérieure et des corps roulants 2 ou fournir un roulement tel que décrit précédemment ;
- appliquer un lubrifiant, sur au moins une surface de la première bague et/ou de la deuxième bague et/ou d'un corps roulant.

De préférence, l'au moins une surface comprend ou constitue une surface d'un chemin de roulement ou d'une partie de chemin de roulement de l'une des bagues et/ou l'au moins une surface comprend une surface de roulement d'au moins un des corps roulants.

Avantageusement, le lubrifiant est appliqué par jetting ou par pulvérisation sans contact.

De préférence, le lubrifiant a une viscosité cinématique à une température de 20° C comprise entre 8 et 15 St, en particulier égale à 10 St ou sensiblement égale à 10 St. Alternativement, le lubrifiant peut présenter une viscosité cinématique moindre à une température de 20°C. Par exemple, le lubrifiant peut avoir une viscosité cinématique à une température de 20° C comprise entre 0.8 et 1.5 St, en particulier égale à 1.2 St ou sensiblement égale à 1.2 St.

Quel que soit le mode de réalisation ou la variante de réalisation, les corps roulants peuvent être réalisés en acier, en un alliage superélastique tel que le Nitinol, ou encore en céramique, notamment en céramique de type oxyde de zirconium ou encore en céramique de type nitrure de silicium. Des éléments roulants de différents matériaux peuvent par ailleurs être combinés au sein d'un même roulement. L'utilisation de céramique permet d'obvier aux risques de microsoudures et/ou de corrosion provoqués dans le temps par un contact acier sur acier. Les corps roulants en nitrure de silicium offrent notamment une résistance élevée, une forte résistance à l'abrasion, une excellente rigidité et une très bonne résistance à la corrosion. Cette céramique a en outre une densité inférieure de 40% à celle de l'acier.

Quel que soit le mode de réalisation ou la variante de réalisation, la cage peut, quant à elle, être réalisée en un alliage à base de cuivre tel que le CuBe2, ou encore en acier. Alternativement, la cage peut être réalisée en tout autre matériau.

Quel que soit le mode de réalisation ou la variante de réalisation, le roulement peut comprendre entre 5 et 11 billes, notamment 7 billes, voire plus pour un roulement sans cage (non revendiqué).

Quel que soit le mode de réalisation ou la variante de réalisation, au moins une surface de la première bague et/ou de la deuxième bague et/ou d'un corps roulant est recouverte d'un lubrifiant. Le lubrifiant est par exemple un lubrifiant dont la viscosité cinématique à une température de 20° C est comprise entre 8 et 15 St, en particulier égale à 10 St ou environ égale à 10 St. Le lubrifiant peut être une huile.

Quel que soit le mode de réalisation ou la variante de réalisation, le roulement est de manière privilégiée un roulement à quatre points de contact.

Les corps roulants sont préférentiellement des billes. Alternativement, quel que soit le mode de réalisation ou la variante de réalisation, les corps roulants peuvent être des aiguilles ou des rouleaux, notamment des rouleaux cylindriques ou tronconiques.

Dans le deuxième mode de réalisation, le roulement peut, de manière privilégiée, comporter entre 25 et 35 corps roulants ou billes, notamment 27 ou 28 ou 29 ou 30 corps roulants ou billes.

Quel que soit le mode de réalisation du roulement, le lubrifiant est appliqué de manière privilégiée par « jetting » ou pulvérisation sans contact. Un tel procédé de lubrification permet d'appliquer un volume maîtrisé de lubrifiant spécifié et adapté pour minimiser le bruit de fonctionnement du roulement, voire annuler le bruit de fonctionnement du roulement. Préférentiellement, le lubrifiant, en particulier une goutte d'huile, est appliqué directement sur un corps roulant. La totalité des corps roulants peuvent être lubrifiés. Alternativement, seuls un ou certains corps roulants peuvent être lubrifiés. Dans ce dernier cas, des surfaces des autres corps roulants seront lubrifiés lors du fonctionnement du roulement par contact du corps roulant lubrifié avec un chemin de roulement, puis par contact des autres corps roulants avec le chemin de roulement.

Le terme "lubrifiant" se réfère ici à toute matière susceptible de réduire le frottement entre les corps roulants et les bagues, qu'il s'agisse d'un lubrifiant solide, pâteux, ou liquide. L'huile est choisie de manière privilégiée. Des tests effectués montrent en effet qu'une huile dotée d'une viscosité de l'ordre de 10 St permet de répondre parfaitement à des objectifs de performance d'un roulement à billes, notamment en matière de bruit.

Dans tout ce document, par « roulement lubrifié », nous entendons un roulement dont une surface de la bague intérieure et/ou de la bague extérieure et/ou de la cage et/ou de tout ou partie des corps roulants sont lubrifiés.

Dans tout ce document, par « surface potentielle de contact » entre deux composants, nous entendons une surface de contact de ces deux composants lorsque ces derniers sont en contact suite à un rattrapage d'un jeu.

Dans tout ce document, par « traversant », on qualifie une ouverture ou un trou qui traverse toute l'épaisseur d'une pièce, notamment de la cage.

Dans tout ce document, par « débouchant », on qualifie une ouverture ou un trou qui est positionné au bord d'une pièce, notamment de la cage, le trou formant lui-même une partie du bord de la pièce.

Le roulement permet d'assurer un guidage en rotation d'un premier composant relativement à un deuxième composant autour de l'axe A1. Selon sa nature, le roulement permet aussi d'assurer une reprise, par le deuxième composant, d'efforts axiaux exercés sur le premier composant.

Avantageusement, un exemple de réalisation intéressant d'un roulement à billes horloger ne faisant pas partie de l'invention comprend une bague intérieure 4, une bague extérieure 3 et des billes 2. Au moins une surface de la bague intérieure et/ou de la bague extérieure et/ou d'une bille est recouverte d'un lubrifiant. Le roulement comprend entre 25 et 35 billes, en particulier 27 ou 28 ou 29 ou 30 billes. Le roulement ne comprend pas de cage de séparation des corps roulants ou le roulement est du type à corps roulants jointifs, notamment du type plein de billes, ou les billes sont susceptibles de venir en contact les unes avec les autres. Au moins une bille ou certaines billes ou toutes les billes sont en acier. La bague intérieure est en acier et la bague extérieure est en acier.

Avantageusement, les billes sont en acier à roulement, comme un acier faiblement allié contenant du Cr, par exemple 100Cr6 (DIN 1.3505) ou 100CrMo7-3 (DIN 1.3536).

Avantageusement, la bague intérieure est en acier inoxydable, par exemple du 4C27A (DIN 1.4197).

Avantageusement, la bague extérieure est en acier inoxydable, par exemple du 4C27A (DIN 1.4197).

Avantageusement, les billes sont montées dans les bagues avec un jeu tangentiel. Ce jeu est mesuré entre les billes d'extrémité quand toutes les billes sont en contact, c'est-à-dire quand les billes forment une chaîne avec deux billes d'extrémité et des billes intermédiaires, chaque bille intermédiaire étant en contact avec deux billes voisines et chaque bille d'extrémité étant en contact avec une seule bille intermédiaire. Le jeu est par exemple supérieur ou égal au rayon des billes. Le jeu est par exemple inférieur ou égal au diamètre des billes.

Un premier roulement à billes selon une réalisation particulière de ce mode de réalisation intéressant comprend 27 billes. Il a été testé. Pour ce faire, il a été monté sur un mouvement dans une pièce d'horlogerie pour guider en rotation une masse oscillante. Un capteur sonore a été placé à 5 cm de la glace de la pièce d'horlogerie. Quand la pièce d'horlogerie est initialement bougée pour faire tourner la masse oscillante, un niveau sonore de 25 dBA est enregistré par le capteur. Après un cycle prédéterminé de rotation de la masse oscillante (prévu pour provoquer une usure équivalente à celle obtenue après 10 ans d'utilisation normale de la pièce d'horlogerie), la pièce d'horlogerie est encore bougée pour faire tourner la masse oscillante et un niveau sonore de 25 dBA est de nouveau enregistré par le capteur. Un deuxième roulement à billes a été testé. Il diffère du premier roulement à billes uniquement en ce que ses billes sont en nitrure de silicium. Il a été monté sur un même mouvement dans une même pièce d'horlogerie pour guider en rotation une même masse oscillante. Un même capteur sonore a été placé à 5 cm de la glace de la pièce d'horlogerie. Quand la pièce d'horlogerie est initialement bougée pour faire tourner la masse oscillante, un niveau sonore de 25 dBA est enregistré par le capteur. Après le cycle prédéterminé de rotation de la masse oscillante (prévu pour provoquer une usure équivalente à celle obtenue après 10 ans d'utilisation normale de la pièce d'horlogerie), la pièce d'horlogerie est encore bougée pour faire tourner la masse oscillante et un niveau sonore de 33 dBA est cette fois enregistré par le capteur. Il apparaît donc intéressant d'utiliser, dans un roulement horloger, des billes en acier (et non des billes en céramique) vis-à-vis d'un critère sonore.

Avantageusement, un exemple de réalisation intéressant d'un dispositif de masse oscillante ou d'un dispositif de remontage automatique ne faisant pas partie de l'invention comprend :

- un bâti 91, et
- une masse oscillante 92,

    ∘ dont le couple statique est supérieur ou égal à 120 μN.m ou 180 μN.m ou 220 μN.m ou 250 μN.m, et/ou
    ∘ dont la masse est supérieure à 2 g ou 3 g ou 4 g, et

- un roulement à billes 1 selon le mode de réalisation intéressant décrit plus haut, le roulement à billes guidant la masse oscillante sur le bâti autour de l'axe A1, ou
- un roulement à billes 1 comprenant une bague intérieure 4, une bague extérieure 3 et des billes 2, le roulement comprenant au moins une surface de la bague intérieure et/ou de la bague extérieure et/ou d'une bille recouverte d'un lubrifiant,

    ∘ le roulement à billes guidant la masse oscillante sur le bâti autour de l'axe A1,
    ∘ le roulement comprenant entre 25 et 35 billes, en particulier 27 ou 28 ou 29 ou 30 billes,
    ∘ le roulement ne comprenant pas de cage de séparation des billes ou le roulement étant du type à billes jointives, notamment du type plein de billes, ou les billes étant susceptibles de venir en contact les unes avec les autres,

o au moins une bille ou certaines billes ou toutes les billes étant en acier ou en nitrure de silicium ou en alliage superélastique comme du Nitinol,
◦ la bague intérieure étant en acier ou en alliage superélastique comme du Nitinol, et
◦ la bague extérieure étant en acier ou en alliage superélastique comme du Nitinol.

Avantageusement, un exemple de réalisation d'un mouvement horloger comprend l'exemple de réalisation intéressant du dispositif décrit dans le paragraphe précédent.

Avantageusement, un exemple de réalisation d'une pièce d'horlogerie comprend l'exemple de réalisation du mouvement décrit dans le paragraphe précédent ou l'exemple de réalisation intéressant du dispositif décrit précédemment.

**Revendications**

1. Roulement horloger (1) comprenant une première bague (4), notamment une bague intérieure, une deuxième bague (3), notamment une bague extérieure, des corps roulants (2) et une cage (5) de séparation de corps roulants, la cage présentant des premières ouvertures (50) de réception des corps roulants et au moins une première zone (56) de contact destinée à venir en contact avec une bague de roulement et présentant au moins une première conformation (52) en creux, **caractérisé en ce que** la cage et les première et deuxième bagues sont agencées de sorte que l'aire d'une surface (A) de la cage susceptible de venir en contact avec une bague de roulement est inférieure à 0.6 ou 0.5 ou 0.45 ou 0.4 ou 0.3 fois l'aire de :

   - la projection orthogonale (B) de la cage selon un axe (A1) de la cage, notamment un axe (A1) de symétrie de rotation de la cage, lorsque la cage est une cage annulaire plane, ou
   - la surface cylindrique (B) d'un cylindre de diamètre égal à celui du diamètre du cylindre définissant la surface (A) de la cage et compris entre deux bords d'extrémités de la cage lorsque la cage est une cage cylindrique.

2. Roulement horloger selon la revendication précédente, **caractérisé en ce que** la cage présente une forme sensiblement annulaire plane ou **en ce que** la cage présente une forme sensiblement cylindrique.

3. Roulement horloger selon l'une des revendications précédentes, **caractérisé en ce que** la cage comprend un premier bord (58) et un deuxième bord (59), les premières ouvertures étant des ouvertures débouchant au niveau du premier bord ou du deuxième bord et/ou l'au moins une première conformation en creux comprend au moins une deuxième ouverture traversant une épaisseur (57) de la cage.

4. Roulement horloger selon la revendication précédente, **caractérisé en ce que** la cage présente une forme sensiblement annulaire plane, le premier bord étant un bord extérieur et le deuxième bord étant un bord intérieur, ou **en ce que** la cage présente une forme sensiblement cylindrique, le premier bord étant un bord d'une première extrémité (581) et le deuxième bord étant un bord d'une deuxième extrémité (591).

5. Roulement horloger selon l'une des revendications précédentes, **caractérisé en ce qu'**elle comprend plusieurs conformations en creux, notamment plusieurs deuxièmes ouvertures (52), disposées chacune entre deux premières ouvertures adjacentes.

6. Roulement horloger selon l'une des revendications précédentes, **caractérisé en ce que** la zone de contact (56) comprend au moins une première conformation (55) en saillie dont un sommet (551) est destiné à participer à une interface cage-bague de roulement.

7. Roulement horloger selon la revendication précédente, **caractérisé en ce que** l'au moins une première conformation en saillie comprend une nervure de forme circulaire ou sensiblement circulaire et/ou **en ce que** l'au moins une première conformation en saillie comprend un ensemble de bossages, notamment au moins trois bossages, en particulier au moins trois bossages disposés circulairement ou sensiblement circulairement et/ou au moins trois bossages disposés à intervalle angulaire régulier ou sensiblement régulier relativement à un axe de la cage.

8. Roulement selon l'une des revendications précédentes, **caractérisé en ce qu'**une surface d'une des première et deuxième bagues comprend au moins une deuxième zone de contact (49) présentant au moins une deuxième conformation en creux (42a ; 42b) et/ou au moins une deuxième conformation (41a ; 41b) en saillie dont le sommet participe à une interface cage-bague.

9. Roulement selon la revendication précédente, **caractérisé en ce que** l'au moins une deuxième conformation en saillie comprend une nervure de forme circulaire ou sensiblement circulaire et/ou **en ce que** l'au moins une deuxième conformation en saillie comprend un ensemble de bossages, notamment au moins trois bossages, en particulier au moins trois bossages disposés circulairement ou sensiblement circulairement et/ou au moins trois bossages disposés à intervalle angulaire régulier ou sensiblement régulier relativement à un axe (A1) du roulement.

**10.** Roulement selon l'une des revendications précédentes, **caractérisé en ce qu'**il comprend au moins une surface de la première bague et/ou de la deuxième bague et/ou d'un corps roulant recouverte d'un lubrifiant, notamment d'un lubrifiant dont la viscosité cinématique à une température de 20° C est comprise entre 8 et 15 St, en particulier égale à 10 St ou environ égale à 10 St et/ou **en ce que** la première bague comprend un premier élément annulaire (4a) et un deuxième élément annulaire (4b), les premier et deuxième éléments annulaires étant conformés de sorte à ménager, lorsqu'ils sont assemblés, une rainure (48) de logement de la cage et/ou **en ce que** les corps roulants sont des billes ou des aiguilles ou des rouleaux, notamment des rouleaux cylindriques ou tronconiques et/ou **en ce que** les corps roulants sont en céramique, notamment en oxyde de zirconium ou en nitrure de silicium.

**11.** Mécanisme horloger (200), notamment dispositif de masse oscillante ou dispositif de remontage automatique, comprenant un roulement selon l'une des revendications 1 à 10.

**12.** Mouvement horloger (300) comprenant un roulement selon l'une des revendications 1 à 10.

**13.** Pièce d'horlogerie (400), notamment montre bracelet, comprenant un mouvement selon la revendication précédente ou un roulement selon l'une des revendications 1 à 10 ou un mécanisme selon la revendication 11.

**14.** Procédé de réalisation d'un roulement horloger ou d'un mécanisme horloger ou d'un mouvement horloger ou d'une pièce d'horlogerie, le procédé comprenant les étapes suivantes :

- fournir un roulement selon l'une des revendications 1 à 9 ;
- appliquer, sur au moins une surface de la première bague et/ou de la deuxième bague et/ou d'un corps roulant, un lubrifiant, notamment un lubrifiant dont la viscosité cinématique à une température de 20° C est comprise entre 8 et 15 St, en particulier égale à 10 St ou sensiblement égale à 10 St.

**15.** Procédé selon la revendication précédente, **caractérisé en ce que** le lubrifiant est appliqué par jetting ou par pulvérisation sans contact.

**Patentansprüche**

**1.** Uhrenlager (1), umfassend einen ersten Ring (4), insbesondere einen Innenring, einen zweiten Ring (3), insbesondere einen Außenring, Wälzkörper (2) und einen Käfig (5) zum Trennen von Wälzkörpern, wobei der Käfig erste Öffnungen (50) zur Aufnahme der Wälzkörper und zumindest einen ersten Kontaktbereich (56) aufweist, der dazu bestimmt ist, mit einem Lagerring in Kontakt zu kommen, und zumindest eine erste Vertiefung (52) aufweist, **dadurch gekennzeichnet, dass** der Käfig sowie der erste und der zweite Ring so angeordnet sind, dass die Fläche einer Oberfläche (A) des Käfigs, die mit einem Lagerring in Kontakt kommen kann, kleiner ist als das 0,6- oder 0,5- oder 0,45 oder 0,4 oder 0,3-fache der Fläche:

- der Orthogonalprojektion (B) des Käfigs entlang einer Achse (A1) des Käfigs, insbesondere einer Rotationssymmetrieachse (A1) des Käfigs, wenn der Käfig ein ebener ringförmiger Käfig ist, oder
- der Zylinderfläche (B) eines Zylinders mit einem Durchmesser, der gleich dem Durchmesser des Zylinders ist, der die Oberfläche (A) des Käfigs definiert und zwischen zwei Endkanten des Käfigs eingeschlossen ist, wenn der Käfig ein zylindrischer Käfig ist.

**2.** Uhrenlager nach dem vorangehenden Anspruch, **dadurch gekennzeichnet, dass** der Käfig eine im Wesentlichen ringförmige ebene Form aufweist oder dass der Käfig eine im Wesentlichen zylindrische Form aufweist.

**3.** Uhrenlager nach einem der vorangehenden Ansprüche, **dadurch gekennzeichnet, dass** der Käfig eine erste Kante (58) und eine zweite Kante (59) umfasst, wobei die ersten Öffnungen Öffnungen sind, die im Bereich der ersten Kante oder der zweiten Kante münden und/oder wobei die zumindest eine erste Verformung zumindest eine zweite Öffnung umfasst, die durch eine Dicke (57) des Käfigs verläuft.

**4.** Uhrenlager nach dem vorangehenden Anspruch, **dadurch gekennzeichnet, dass** der Käfig eine im Wesentlichen ringförmige ebene Form aufweist, wobei die erste Kante eine Außenkante ist und wobei die zweite Kante eine Innenkante ist oder wobei der Käfig eine im Wesentlichen zylindrische Form aufweist, wobei die erste Kante eine Kante eines ersten Endes (581) ist und die zweite Kante eine Kante eines zweiten Endes (591) ist.

**5.** Uhrenlager nach einem der vorangehenden Ansprüche, **dadurch gekennzeichnet, dass** es mehrere Vertiefungen, insbesondere mehrere jeweils zwischen zwei benachbarten ersten Öffnungen angeordnete zweite Öffnungen (52), aufweist.

6. Uhrenlager nach einem der vorangehenden Ansprüche, **dadurch gekennzeichnet, dass** der Kontaktbereich (56) zumindest eine erste Ausstülpung (55) umfasst, von der ein Scheitelpunkt (551) an einer Käfig-Lagerring-Schnittstelle beteiligt sein soll.

7. Uhrenlager nach dem vorangehenden Anspruch, **dadurch gekennzeichnet, dass** die zumindest eine erste Ausstülpung eine kreisförmige oder im Wesentlichen kreisförmige Rippe aufweist und/oder dass die zumindest eine erste Ausstülpung eine Gruppe von Erhebungen, insbesondere zumindest drei Erhebungen, insbesondere zumindest drei kreisförmig oder im Wesentlichen kreisförmig angeordnete Erhebungen und/oder zumindest drei in regelmäßigen oder im Wesentlichen regelmäßigen Winkelabständen zu einer Achse des Käfigs angeordnete Erhebungen umfasst.

8. Lager nach einem der vorangehenden Ansprüche, **dadurch gekennzeichnet, dass** eine Oberfläche des ersten oder des zweiten Rings zumindest einen zweiten Kontaktbereich (49) umfasst, der zumindest eine zweite Vertiefung (42a; 42b) und/oder zumindest eine zweite Ausstülpung (41a; 41b), deren Scheitelpunkt an einer Käfig-Ring-Schnittstelle beteiligt ist, aufweist.

9. Lager nach dem vorangehenden Anspruch, **dadurch gekennzeichnet, dass** die zumindest eine zweite Ausstülpung eine kreisförmige oder im Wesentlichen kreisförmige Rippe aufweist und/oder dass die zumindest eine zweite Ausstülpung eine Gruppe von Erhebungen, insbesondere zumindest drei Erhebungen, insbesondere zumindest drei kreisförmig oder im Wesentlichen kreisförmig angeordnete Erhebungen und/oder zumindest drei in regelmäßigen oder im Wesentlichen regelmäßigen Winkelabständen zu einer Lagerachse (A1) angeordnete Erhebungen umfasst.

10. Lager nach einem der vorangehenden Ansprüche, **dadurch gekennzeichnet, dass** es zumindest eine Oberfläche des ersten Rings und/oder des zweiten Rings und/oder eines Wälzkörpers umfasst, die mit einem Schmiermittel, insbesondere einem Schmiermittel, dessen kinematische Viskosität bei einer Temperatur von 20 °C zwischen 8 und 15 St, insbesondere 10 St oder etwa 10 St, beträgt, bedeckt ist und/oder dass der erste Ring ein erstes ringförmiges Element (4a) und ein zweites ringförmiges Element (4b) umfasst, wobei das erste und das zweite ringförmige Element so geformt sind, dass sie, wenn sie zusammengefügt sind, eine Nut (48) zur Aufnahme des Käfigs bilden und/oder dass die Wälzkörper Kugeln oder Nadeln oder Rollen, insbesondere zylindrische oder kegelstumpfförmige Rollen, sind und/oder dass die Wälzkörper aus Keramik, insbesondere aus Zirkonoxid oder Siliziumnitrid, sind.

11. Uhrenmechanismus (200), insbesondere Schwungmassenvorrichtung oder automatische Aufzugvorrichtung, umfassend ein Lager nach einem der Ansprüche 1 bis 10.

12. Uhrwerk (300), umfassend ein Lager nach einem der Ansprüche 1 bis 10.

13. Zeitmessgerät (400), insbesondere Armbanduhr, umfassend ein Uhrwerk nach dem vorangehenden Anspruch oder ein Lager nach einem der Ansprüche 1 bis 10 oder einen Mechanismus nach Anspruch 11.

14. Verfahren zur Herstellung eines Uhrenlagers oder eines Uhrenmechanismus oder eines Uhrwerks oder eines Zeitmessgeräts, wobei das Verfahren die folgenden Schritte umfasst:

   - Bereitstellen eines Lagers nach einem der Ansprüche 1 bis 9;
   - Aufbringen eines Schmiermittels, insbesondere eines Schmiermittels, dessen kinematische Viskosität bei einer Temperatur 20° C zwischen 8 und 15 St, insbesondere 10 St oder im Wesentlichen 10 St, beträgt, auf zumindest eine Oberfläche des ersten Rings und/oder des zweiten Rings und/oder eines Wälzkörpers.

15. Verfahren nach dem vorangehenden Anspruch, **dadurch gekennzeichnet, dass** das Schmiermittel durch kontaktloses Strahlen oder Zerstäuben aufgebracht wird.

**Claims**

1. A timepiece bearing (1) comprising a first ring (4), particularly an inner ring, a second ring (3), particularly an outer ring, rolling bodies (2) and a cage (5) for separating rolling bodies (2) for a bearing (1), the cage having first openings (50) for receiving rolling bodies and at least one first contact zone (56) intended to come into contact with a bearing ring and having at least one hollow formation (52), wherein the cage and the first and second rings are arranged so that the area of a surface (A) of the cage capable of coming into contact with the ring is less than 0.6 or 0.5 or 0.45 or 0.4 or 0.3 times the area of:

   - the orthogonal projection (B) of the cage along an axis (A1) of the cage, particularly an axis (A1) of rotational symmetry of the cage, when the cage is a flat annular cage; or

- the cylindrical surface (B) of a cylinder having a diameter equal to that of the diameter of the cylinder defining the surface (A) of the cage and included between two end edges of the cage when the cage is a cylindrical cage.

2. The timepiece bearing as claimed in the preceding claim, wherein the cage has a substantially flat annular shape or wherein the cage has a substantially cylindrical shape.

3. The timepiece bearing as claimed in one of the preceding claims, wherein the cage comprises a first edge (58) and a second edge (59), the first openings being openings emerging on the first edge or on the second edge and/or the at least one first hollow formation comprises at least one second opening passing through a thickness (57) of the cage.

4. The timepiece bearing as claimed in the preceding claim, wherein the cage has a substantially flat annular shape, the first edge being an outer edge and the second edge being an inner edge, or wherein the cage has a substantially cylindrical shape, the first edge being an edge of a first end (581) and the second edge being an edge of a second end (591).

5. The timepiece bearing as claimed in one of the preceding claims, wherein it comprises a plurality of hollow formations, particularly a plurality of second openings (52), each disposed between two first adjacent openings.

6. The timepiece bearing as claimed in one of the preceding claims, wherein the contact zone (56) comprises at least one first projecting formation (55), a top (551) of which is intended to participate in a cage-bearing ring interface.

7. The timepiece bearing as claimed in the preceding claim, wherein the at least one first projecting formation comprises a rib of circular or substantially circular shape and/or wherein the at least one first projecting formation comprises a set of bosses, particularly at least three bosses, in particular at least three bosses disposed circularly or substantially circularly and/or at least three bosses disposed at a regular or substantially regular angular interval relative to an axis of the cage.

8. The bearing as claimed in one of the preceding claims, wherein a surface of one of the first and second rings comprises at least one second contact zone (49) having at least one second hollow formation (42a; 42b) and/or at least one second projecting formation (41a; 41b), the top of which participates in a cage-ring interface.

9. The bearing as claimed in the preceding claim, wherein the at least one second projecting formation comprises a circular or substantially circular shaped rib and/or wherein the at least one second projecting formation comprises a set of bosses, particularly at least three bosses, in particular at least three bosses disposed circularly or substantially circularly and/or at least three bosses disposed at a regular or substantially regular angular interval relative to an axis (A1) of the bearing.

10. The bearing as claimed in one of the preceding claims, wherein it comprises at least one surface of the first ring and/or of the second ring and/or of a rolling body coated with a lubricant, particularly a lubricant with kinematic viscosity at a temperature of 20°C that is between 8 and 15 St, in particular equal to 10 St or approximately equal to 10 St and/or wherein the first ring comprises a first annular element (4a) and a second annular element (4b), the first and second annular elements being shaped so as to provide, when they are assembled, a groove (48) for accommodating the cage and/or wherein the rolling bodies are balls or needles or rollers, particularly cylindrical or tapered rollers, and/or wherein the rolling bodies are made of ceramic, particularly made of zirconium oxide or silicon nitride.

11. A timepiece mechanism (200), particularly an oscillating weight device or an automatic winding device, comprising a bearing as claimed in one of claims 1 to 10.

12. A timepiece movement (300) comprising a bearing as claimed in one of claims 1 to 10.

13. A timepiece (400), particularly a wrist watch, comprising a movement as claimed in the preceding claim or a bearing as claimed in one of claims 1 to 10 or a mechanism as claimed in claim 11.

14. A method for producing a timepiece bearing or a timepiece mechanism or a timepiece movement or a timepiece, the method comprising the following steps:

   - providing a bearing as claimed in one of claims 1 to 9;
   - applying, on at least one surface of the first ring and/or of the second ring and/or of a rolling body, a lubricant, particularly a lubricant with kinematic viscosity at a temperature of 20°C that is between 8 and 15 St, in particular equal to 10 St or substantially equal to 10 St.

15. The method as claimed in the preceding claim, wherein the lubricant is applied by jetting or by contactless spraying.

**Figure 1**

**Figure 2**

200 300 400

50a 41a, 49

1

53

2

43a

3

50b 41b, 49

**Figure 3**

58 5

581 50

A1

51a

52

51a

591 59

**Figure 4**

Figure 5

Figure 6

**Figure 7**

**Figure 8**

Figure 9

Figure 10

Figure 11

Figure 12

B

A1

**Figure 13**

A

A1

**Figure 14**

Figure 15

Figure 16

B

A1

**Figure 17**

A

A1

**Figure 18**

**Figure 19**

**Figure 20**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1520111 A
- CH 709348
- EP 2787234 A
- CH 711020
- FR 2886995 A1
- DE 1447346 A